# FASCICULE DE BREVET EUROPEEN

(11) **EP 4 431 200 B1**
(45) Date de publication et mention de la délivrance du brevet: **06.05.2026**
(21) Numéro de dépôt: 24162968.2
(22) Date de dépôt: 12.03.2024
(51) Int. Cl.: B21D 22/02, B21D 28/02, B21D 28/16, B21D 28/24, B21D 53/10, B21K 23/00, F16C 33/58, F16C 35/067

(54) **PROCEDE DE FABRICATION D'UN FLASQUE DE MAINTIEN D'UNE BAGUE EXTERIEURE D'UN ROULEMENT**
VERFAHREN ZUR HERSTELLUNG EINER HALTERUNGSPLATTE EINES LAGERAUSSENRINGES
METHOD FOR MANUFACTURING A FLANGE FOR HOLDING AN OUTER RING OF A ROLLING BEARING

(30) Priorité: 17.03.2023 FR 2302522
(43) Date de publication de la demande: 18.09.2024
(73) Titulaire: NTN Europe, 74000 Annecy (FR)
(72) Inventeur: PALLANCHARD, Vincent, 74000 ANNECY (FR); REDOUTEY, Louis, 74010 ANNECY (FR); THOMAS, Romain, 74230 DINGY-SAINT-CLAIR (FR)
(74) Mandataire: Alatis

(56) Documents cités:
- EP-A1- 3 056 750
- DE-U1- 202014 105 640

## Description

### DOMAINE TECHNIQUE DE L'INVENTION

L'invention se rapporte à un procédé de fabrication d'un flasque de maintien d'une bague extérieure de roulement, à un flasque de maintien obtenu par ce procédé, et à un ensemble de guidage en rotation intégrant un tel flasque de maintien.

L'invention s'applique plus particulièrement aux flasques de maintien permettant de maintenir et de guider une bague extérieure de roulement au cours de son montage à l'intérieur d'un carter, par exemple un carter de boîte de transmission ou de moteur, notamment de moteur électrique, d'un véhicule automobile. De telles brides de maintien n'ont pas nécessairement de fonction une fois la boîte de transmission assemblée.

### ÉTAT DE LA TECHNIQUE ANTERIEURE

Dans le document FR 3032500 est décrit un procédé d'assemblage d'un flasque de maintien dans une gorge d'une bague extérieure de roulement, formée entre une portée avant de la bague présentant un premier diamètre et une portée arrière de la bague présentant un deuxième diamètre supérieur au premier diamètre. Le flasque de maintien présente un alésage dont le diamètre est compris entre lesdits premier et deuxième diamètres, un ergot de montage qui est saillant radialement vers l'intérieur par rapport au diamètre de l'alésage, ainsi qu'au moins un organe d'assemblage qui est déformable radialement entre un état de montage et un état monté. Pour assembler le flasque de maintien sur la bague extérieure de roulement, l'ergot de montage est disposé dans la gorge, puis l'organe d'assemblage est déformé radialement pour être disposé au moins en partie dans la gorge. Cet assemblage doit impérativement préserver un jeu fonctionnel suffisant pour autoriser un mouvement de la bague de roulement dans le flasque de maintien. En pratique, ce type de flasque de maintien peut être utilisé pour faciliter un montage en aveugle d'un roulement dans un carter. Après montage du roulement sur un arbre et du flasque de maintien sur la bague extérieure du roulement, le sous-ensemble ainsi constitué est introduit en aveugle dans un carter de boîte de transmission. Des tiges filetées ou des vis, traversant des trous de montage d'une plaque de fond du carter, sont vissées dans des trous taraudés du flasque de maintien, et permettent de progressivement amener le flasque dans une position finale, en exerçant indirectement sur la bague extérieure du roulement un effort axial permettant le positionnement, notamment l'ajustement ou le frettage de cette bague extérieure dans un logement prévu à cet effet dans la plaque de fond du carter. Dans cette phase d'assemblage, il est essentiel de ménager un jeu entre la bague de roulement et le flasque de maintien, pour, d'une part, permettre à la bague de roulement d'avoir une liberté de positionnement suffisante pour assurer son centrage dans le logement de frettage, et, d'autre part, permettre au flasque de maintien d'avoir une liberté de rotation garantissant un effort purement axial sur les tiges filetées ou les vis assurant le montage, afin d'éviter leur cisaillement et/ou leur flexion.

Le flasque de maintien, qui présente une épaisseur relativement importante pour lui conférer une bonne raideur, a vocation à être fabriqué en une étape d'emboutissage et une étape de découpe à la presse. On constate toutefois qu'il est difficile de maîtriser les dimensions de l'alésage sur l'ensemble de l'épaisseur de la plaque, car la découpe à la presse n'est franche que sur une partie de l'épaisseur de la plaque, et s'apparente davantage à un déchirement sur une autre partie de l'épaisseur de la plaque. Il en résulte que les tolérances de fabrication et d'assemblage ne permettent pas de garantir le degré de liberté de mouvement souhaité entre le flasque de maintien et la bague extérieure de roulement.

### EXPOSE DE L'INVENTION

L'invention vise à remédier aux inconvénients de l'état de la technique et à proposer un procédé de fabrication d'un flasque de maintien du type précédent, en un nombre limité d'opérations, le flasque de maintien résultant permettant de limiter les problèmes décrits plus haut rencontrés lors de l'assemblage.

Pour ce faire est proposé, selon un premier aspect de l'invention, un procédé de fabrication d'un flasque de maintien destiné à s'insérer dans une gorge d'une bague extérieure d'un roulement, à partir d'une plaque métallique ayant une épaisseur de plaque mesurée entre une face avant et une face arrière opposée de la plaque métallique, le procédé étant caractérisé en ce qu'il comprend au moins les deux étapes suivantes :
- par pénétration d'un premier outil, suivant un axe de référence perpendiculaire à la plaque et dans un sens de pénétration depuis la face avant sur une profondeur intermédiaire inférieure à l'épaisseur de plaque, de la matière située initialement à l'intérieur d'une enveloppe géométrique avant est repoussée dans un volume situé au-delà du premier outil dans le sens de pénétration et délimité par une enveloppe géométrique d'ébauche, l'enveloppe géométrique d'ébauche étant située, en projection sur un plan perpendiculaire à l'axe de référence, à l'intérieur de l'enveloppe géométrique avant, l'enveloppe géométrique avant comportant au moins deux portions cylindriques centrées sur l'axe de référence, séparées par au moins une encoche de maintien et une encoche d'assemblage en saillies radialement à l'opposé de l'axe de référence par rapport aux portions cylindriques ;
- par pénétration d'un deuxième outil suivant l'axe de référence et dans le sens de pénétration, la plaque est perforée pour former un alésage final ayant une enveloppe géométrique arrière située, en projection sur un plan perpendiculaire à l'axe de référence, radialement à l'intérieur de l'enveloppe géométrique avant et à l'extérieur de l'enveloppe géométrique d'ébauche.

Dans cette définition et dans l'ensemble de l'exposé, l'enveloppe géométrique d'ébauche, l'enveloppe géométrique avant et l'enveloppe géométrique arrière sont trois surfaces fermées.

À l'issue de la pénétration par le premier outil, l'ébauche de flasque présente, sur sa partie située à l'intérieur de l'enveloppe géométrique avant, entre l'enveloppe géométrique d'ébauche et l'enveloppe géométrique avant, une épaisseur correspondant à la différence entre l'épaisseur initiale de la plaque et la profondeur de pénétration du premier outil. La découpe de l'alésage final par pénétration du deuxième outil est donc effectuée sur une épaisseur inférieure à l'épaisseur initiale de la plaque, ce qui permet de réduire considérablement l'effet de déchirement en fin de découpe, et ainsi de mieux maîtriser les dimensions de l'alésage final.

Le flasque de maintien résultant présente, sur le pourtour de l'alésage final, dans l'espace compris entre l'enveloppe géométrique avant et l'enveloppe géométrique arrière, une épaisseur réduite, correspondant à la différence entre l'épaisseur initiale de la plaque et la profondeur de pénétration du premier outil. Cette épaisseur réduite est de préférence choisie pour être strictement inférieure à la largeur de la gorge formée dans la bague extérieure à laquelle le flasque de maintien est destiné. La portion du flasque de maintien dont l'épaisseur reste égale à l'épaisseur initiale de la plaque se trouve radialement à l'extérieur de l'enveloppe géométrique avant, et ne risque pas de venir au contact de la bague extérieure de roulement en position nominale.

Pour une fabrication à la chaîne, les outils peuvent être disposés sur différents postes de formage et les plaques métalliques acheminées d'un poste de formage au suivant par tout moyen approprié, par exemple par une bande transporteuse. Chaque poste est équipé d'une matrice inférieure sur laquelle repose et est maintenue la plaque métallique à chaque étape de formage. Les outils peuvent être entraînés par tout moyen approprié, par exemple par une ou plusieurs presses mécaniques ou hydrauliques. De préférence une seule et même presse porte, entre autres, le premier et le deuxième outils, qui travaillent ainsi de façon synchrone sur les plaques métalliques qui sont acheminées d'un poste à l'autre à chaque levée de la presse.

Lors de l'étape de pénétration du premier outil, la matière repoussée peut être contenue dans une matrice faisant face au premier outil. Alternativement, il est prévu une étape préliminaire dans laquelle un outil d'ébauche pénètre suivant l'axe de référence dans le sens de pénétration depuis la face avant, pour perforer la plaque et former un trou d'ébauche ayant pour contour l'enveloppe géométrique d'ébauche entourant l'axe de référence. Dans cette hypothèse, la matière repoussée par la pénétration du premier outil pénètre dans le trou d'ébauche. L'outil d'ébauche permettant de perforer la plaque peut être un poinçon de forme quelconque, par exemple un poinçon circulaire ou rectangulaire, de section égale à la section de l'enveloppe géométrique d'ébauche.

La plaque métallique est de préférence rectangulaire.

Suivant un mode de réalisation, l'encoche d'assemblage de l'enveloppe géométrique avant est perforée suivant l'axe de référence pour former un trou et un organe d'assemblage plastiquement déformable situé entre le trou et l'enveloppe géométrique arrière. La perforation est de préférence effectuée lors de l'étape de pénétration du premier outil ou de l'étape de pénétration du deuxième outil. L'organe d'assemblage formé sur l'encoche de l'enveloppe géométrique avant est alors obtenu sans étape supplémentaire.

Suivant un mode de réalisation, l'enveloppe géométrique arrière comporte des portions cylindriques centrées sur l'axe de référence, deux des portions cylindriques étant situées de part et d'autre d'une première singularité de l'enveloppe géométrique arrière, la première singularité étant située radialement dans le prolongement de l'encoche de maintien, pour former une languette d'épaisseur inférieure à l'épaisseur de la plaque métallique en saillie radialement vers l'axe de référence par rapport aux portions cylindriques de l'enveloppe géométrique arrière. Les languettes seront formées dans la matière issue de l'étape de repoussage de la matière entre l'enveloppe géométrique avant et l'enveloppe géométrique d'ébauche.

Suivant un mode de réalisation, la première singularité comporte des zones de raccordement entre la languette et les deux portions cylindriques situées de part et d'autre de la première singularité, les zones de raccordement s'étendant radialement à l'extérieur des portions cylindriques situées de part et d'autre de la première singularité.

Suivant un mode de réalisation, l'enveloppe géométrique arrière comporte au moins une deuxième singularité située entre deux portions cylindriques adjacentes parmi les portions cylindriques de l'enveloppe géométrique arrière, radialement dans le prolongement de l'encoche d'assemblage, la deuxième singularité comportant des zones de raccordement avec les deux portions cylindriques adjacentes, les zones de raccordement de la deuxième singularité s'étendant :
- radialement à l'extérieur des portions cylindriques de l'enveloppe géométrique arrière et axialement sur l'épaisseur de l'enveloppe géométrique arrière, ou ;
- radialement à l'extérieur des portions cylindriques de l'enveloppe géométrique arrière et axialement sur toute l'épaisseur du flasque de maintien.

Suivant un mode de réalisation préférentiel, l'enveloppe géométrique avant comporte en tout deux portions cylindriques diamétralement opposées, et une encoche de maintien et une encoche d'assemblage séparant les deux portions cylindriques de l'enveloppe géométrique avant, l'encoche de maintien et l'encoche d'assemblage étant diamétralement opposées.

Suivant un mode de réalisation, les perforations sont réalisées par poinçonnage.

Le premier outil est un poinçon de section égale à la section de l'enveloppe géométrique avant. Il réalise un emboutissage qui peut être fait à chaud ou à froid. Le deuxième outil utilisé pour perforer la plaque est un poinçon cylindrique dont la section est comprise entre la section de l'enveloppe géométrique d'ébauche et la section de l'enveloppe géométrique avant, le poinçon permettant d'obtenir une coupe au moins partiellement nette.

Suivant un mode de réalisation, sont découpés dans la plaque, radialement à l'extérieur de l'enveloppe géométrique avant de la plaque, des trous de montage et des trous de maintien, les trous de maintien servant à maintenir la plaque lors des étapes de fabrication. Les trous de maintien peuvent se situer radialement à l'extérieur des trous filetés de montage. Les trous filetés de montage permettent de fixer le flasque de maintien sur le carter du véhicule à l'aide d'éléments de fixation.

Suivant un mode de réalisation, qu'est découpé, en fin de fabrication de la plaque, un contour de la plaque enveloppant les trous de montage et situé radialement à l'intérieur des trous de maintien. Le contour de la plaque est réalisé à la fin des étapes de fabrication du flasque, à l'aide d'un outil de découpe.

Suivant diverses modalités de réalisation :
- la profondeur intermédiaire est supérieure au tiers de l'épaisseur de la plaque, et/ou
- la profondeur intermédiaire est inférieure aux deux tiers de l'épaisseur de la plaque, et/ou
- la différence entre l'épaisseur de la plaque et la profondeur intermédiaire est supérieure à 1mm et inférieure à 3mm, et/ou
- la profondeur intermédiaire est supérieure à 1 mm est inférieure à 3 mm, et/ou
- l'épaisseur de la plaque est supérieure à 3 mm, par exemple 4 mm, et inférieure à 6 mm.

Suivant un mode de réalisation, le deuxième outil réalise une arête vive au niveau de la profondeur intermédiaire et une découpe nette de l'alésage final sur une profondeur d'au moins 0,5 mm à partir de l'arête vive dans le sens de pénétration. Préférentiellement, la découpe nette est effectuée sur toute l'épaisseur de la plaque.

Suivant divers dimensionnements préférentiels :
- les portions cylindriques de l'enveloppe géométrique avant sont situées à une distance radiale de l'alésage final qui est supérieure à 0,1 mm, et de préférence supérieure à 0,5 mm, et inférieure à 1,0 mm, de préférence inférieure à 0,7mm ; et/ou
- les portions cylindriques de l'enveloppe géométrique avant sont situées à une distance radiale de l'enveloppe géométrique d'ébauche qui est supérieure à 1 mm, et de préférence supérieure à 3 mm, et inférieure à 10 mm, de préférence inférieure à 7mm.

Suivant un autre aspect de l'invention, celle-ci a trait à un procédé de fabrication d'un ensemble de guidage en rotation destiné à être monté à l'intérieur d'un carter, comportant la fabrication d'un flasque de maintien tel que décrit précédemment, et le montage du flasque de maintien dans une gorge d'une bague extérieure d'un roulement, la gorge présentant une portée avant ayant un premier diamètre et une portée arrière ayant un deuxième diamètre supérieur au premier diamètre, caractérisé en ce que la languette du flasque de maintien est insérée dans la gorge de la bague extérieure du roulement et en ce qu'on vient déformer plastiquement l'organe d'assemblage pour l'insérer radialement et au moins partiellement dans la gorge, avec un jeu supérieur à 0,1 mm entre l'organe d'assemblage déformé et le fond de la gorge.

Est également décrit un ensemble de guidage en rotation destiné à être monté à l'intérieur d'un carter, obtenu par le procédé de fabrication précédent.

### BREVE DESCRIPTION DES FIGURES

D'autres caractéristiques et avantages de l'invention ressortiront à la lecture de la description qui suit, en référence aux figures annexées :
- la figure 1 est une représentation partielle et en coupe longitudinale d'un montage d'un arbre tournant dans un carter au moyen d'un roulement maintenu en position par un flasque de maintien selon un mode de réalisation de l'invention ;
- la figure 2a et la figure 2b représentent en perspective les deux faces du flasque de maintien de la figure 1 ;
- la figure 3a et la figure 3b représentent respectivement une coupe longitudinale d'un outil d'ébauche réalisant une étape préliminaire de fabrication, et une vue de face du flasque de maintien des figures 2a et 2b à cette étape préliminaire de fabrication ;
- la figure 4a et la figure 4b représentent respectivement une coupe longitudinale d'un premier outil réalisant une première étape de fabrication, et une vue de face du flasque de maintien des figures 2a et 2b à cette première étape de fabrication ;
- la figure 5a et la figure 5b représentent respectivement une coupe longitudinale des outils réalisant une deuxième étape de fabrication, et une vue de face du flasque de maintien des figures 2a et 2b à cette deuxième étape de fabrication.
- la figure 6 représente en coupe longitudinale une variante de l'étape réalisée par le premier outil, en l'absence d'étape préliminaire.

Pour plus de clarté, les éléments identiques ou similaires sont repérés par des signes de référence identiques sur l'ensemble des figures.

### DESCRIPTION DETAILLEE DE MODES DE REALISATION

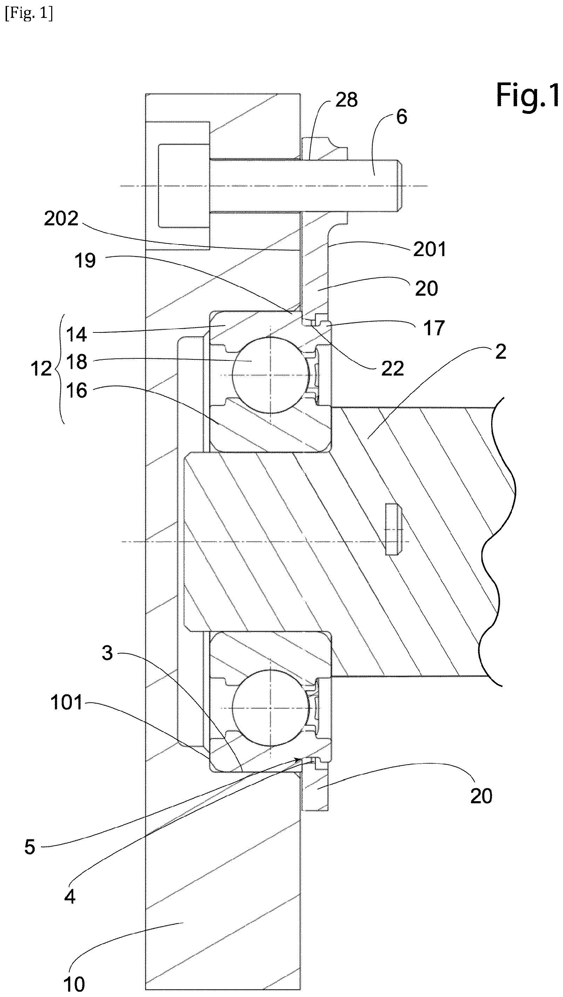

Sur la figure **1** est illustré le montage d'un arbre primaire ou secondaire **2** dans un carter **10** d'une boîte de vitesses ou de moteur, notamment de moteur électrique, de véhicule automobile, ledit montage étant réalisé au moyen d'un roulement **12** comprenant une bague extérieure **14,** une bague intérieure **16** et des corps roulants **18** disposés entre lesdites bagues **14** et **16** pour permettre leur rotation relative. Dans le mode de réalisation représenté, la bague intérieure **16** est tournante et frettée sur l'arbre **2**, la bague extérieure **14** est fixe et frettée ou montée ajustée dans un fond de logement **101** d'un alésage **3** du carter **10.** Les corps roulants **18** sont ici des billes, mais pourrait être également, par exemple, des rouleaux coniques ou cylindriques. La bague extérieure **14** comporte une gorge **22** formée d'une portée avant **17** d'un premier diamètre et d'une portée arrière **19** d'un deuxième diamètre strictement supérieur au premier diamètre. La portée avant **17** forme un flanc avant **4** de la gorge **22** et la portée arrière **19** forme un flanc arrière **5** de la gorge **22,** en regard du flanc avant **4.** Sur la bague extérieure **14** est monté un flasque de maintien **20** comportant une face avant **201** tournée à l'opposé du carter **10,** et une face arrière **202** tournée vers le carter **10** et le flanc arrière **5** de la gorge **22.**

Pour réaliser le montage du roulement **12** dans le carter **10,** on assemble le flasque de maintien **20** dans la gorge **22** du roulement **12,** par un procédé qui sera décrit plus loin. L'ensemble constitué par le flasque de maintien **20** et le roulement **12** est ensuite fretté sur une extrémité axiale de l'arbre **2.** Le sous-ensemble constitué par l'arbre **2, le** roulement **12** et le flasque de maintien **20** est ensuite positionné en aveugle axialement à l'entrée de l'alésage **3** du carter **10.** Pour insérer la bague extérieure **14** dans le fond de logement **101** de l'alésage **3,** par frettage ou avec un jeu, on utilise des vis **6,** qui traversent le carter **10** et viennent en prise dans des trous de montage **28,** qui peuvent être par exemple des trous filetés. Ces vis **6,** réparties à la circonférence du flasque de maintien **20,** sont progressivement serrées pour rapprocher le flasque de maintien **20** du carter **10** et créer une pression de contact entre la bague extérieure **14** et le fond de logement **101** du carter **10.** Au passage, on notera que le flasque de maintien **20** présente, entre la face avant **201** et la face arrière **202,** une épaisseur relativement importante, de préférence plus importante que la largeur de la gorge 22 entre le flanc avant **4** et le flanc arrière **5,** ceci pour conférer au flasque de maintien **20** une raideur élevée, suffisante pour transmettre les efforts d'assemblage et supporter les efforts transmis par l'arbre **2.**

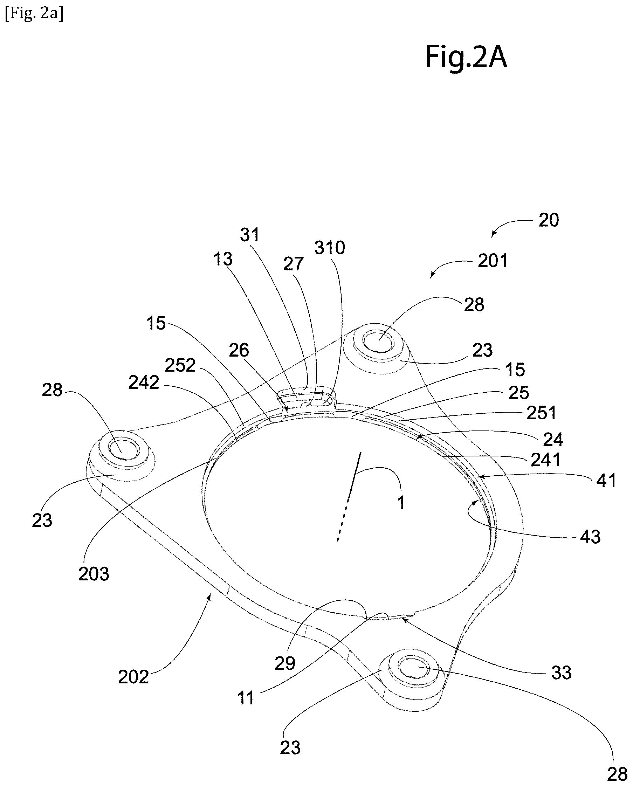

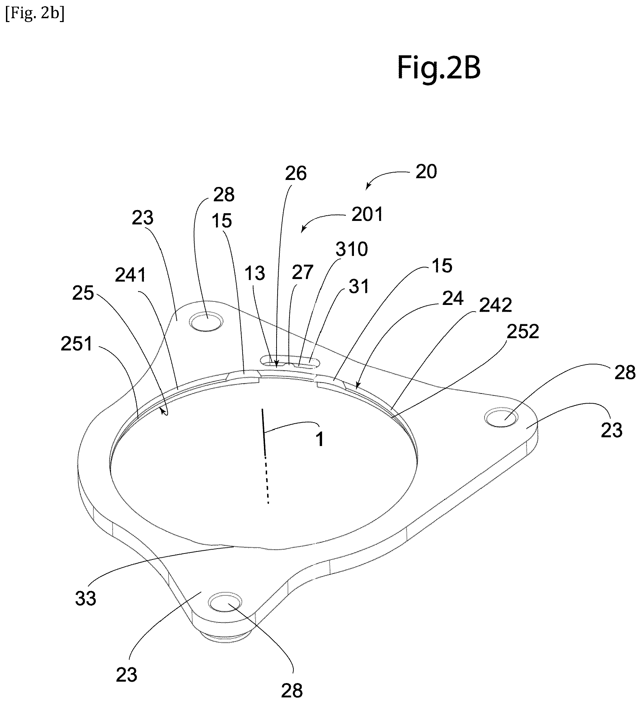

Sur les figures **2a** et **2b** sont illustrées respectivement la face avant **201** et la face arrière **202** du flasque de maintien **20.**

Depuis la face avant **201** du flasque de maintien **20** jusqu'à une profondeur intermédiaire inférieure à l'épaisseur totale du flasque de maintien **20** est formé un alésage **25** ayant pour contour une enveloppe géométrique **41** qui sera appelée enveloppe géométrique avant, centrée sur un axe de référence **1** du flasque **20.** Depuis l'épaisseur intermédiaire du flasque de maintien **20** jusqu'à sa face arrière **202** est formé un alésage **24** dit final ayant pour contour une enveloppe géométrique **43** qui sera appelée enveloppe géométrique arrière, centrée sur l'axe de référence **1** du flasque **20.** Une face **203** parallèle à la face avant **201** et à la face arrière **202** du flasque de maintien **20** relie l'enveloppe géométrique avant **41** et l'enveloppe géométrique arrière **43.**

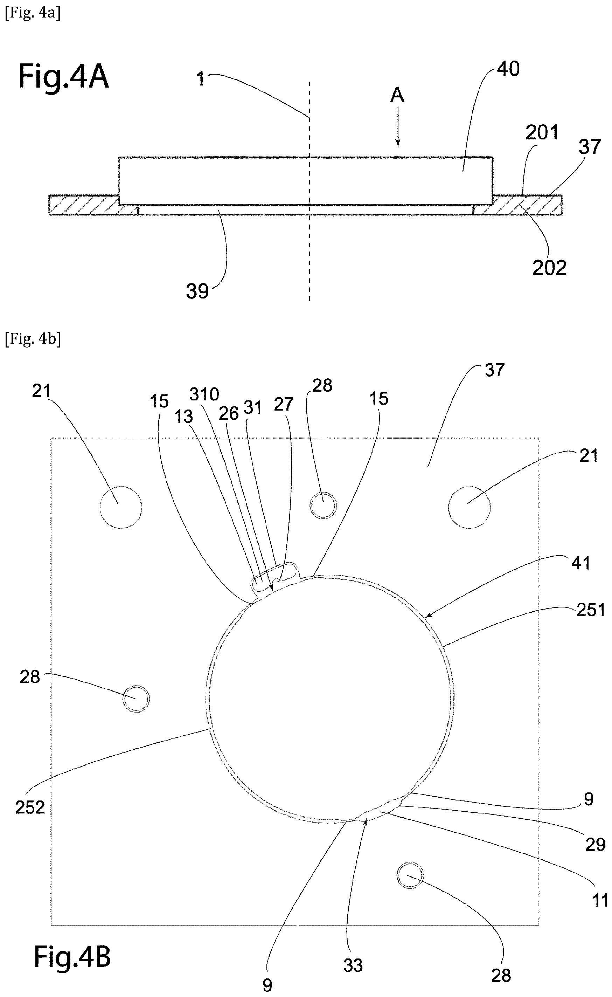

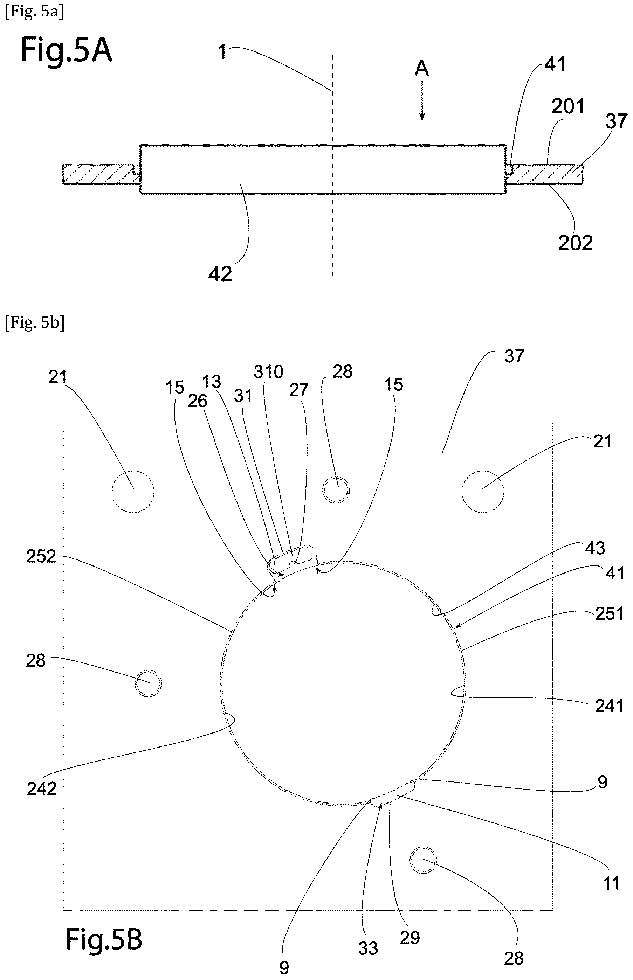

L'enveloppe géométrique avant **41** est composée de deux portions cylindriques **251, 252** diamétralement opposées et séparées par une encoche de maintien **29** et une encoche d'assemblage **31** de préférence diamétralement opposées. L'encoche de maintien **29** présente en projection axiale une forme en U (cf. également les figures **4b** et **5b****),** la largeur de l'encoche, mesurée en direction radiale, étant inférieure à sa longueur, mesurée en direction orthoradiale. L'encoche d'assemblage **31** présente également, toujours en projection axiale, une forme en U, la largeur de l'encoche d'assemblage **31** étant inférieure à sa longueur. L'encoche de maintien **29** et l'encoche d'assemblage **31** sont en saillie radialement vers l'extérieur du flasque de maintien **20.**

L'enveloppe géométrique arrière **43** est composée de deux portions cylindriques **241, 242** diamétralement opposées et séparées par deux singularités **11** et **13,** l'enveloppe géométrique arrière **43** étant de dimensions inférieures à l'enveloppe géométrique avant **41.** La première singularité **11** est située radialement dans le prolongement de l'encoche de maintien **29** et la deuxième singularité **13** est située radialement dans le prolongement de l'encoche d'assemblage **31.** Des zones de raccordement **9** relient les portions cylindriques **241, 242** et la première singularité **11** et des zones de raccordement **15** relient les portions cylindriques **241, 242** et la deuxième singularité **15.** Les zones de raccordement **9** s'étendent radialement à l'extérieur des portions cylindriques **241, 242** de l'enveloppe géométrique arrière **43** et axialement sur l'épaisseur de l'enveloppe géométrique arrière **43** ou sur toute l'épaisseur du flasque de maintien **20 ;** et les zones de raccordement **15** s'étendent radialement à l'extérieur des portions cylindriques **241, 242** de l'enveloppe géométrique arrière **43** et axialement sur l'épaisseur de l'enveloppe géométrique arrière **43** ou sur toute l'épaisseur du flasque de maintien **20.** Les zones de raccordement **9** et **15** se présentent sous la forme de retraits de matière, par exemple des retraits arrondis orientés radialement vers l'extérieur du flasque **20.**

Dans le prolongement axial de l'encoche de maintien **29** et jusqu'à la face arrière **202** du flasque de maintien **20** est formée une languette **33,** et dans le prolongement axial de l'encoche d'assemblage **31** et jusqu'à la face arrière **202** du flasque de maintien **20** est percé un trou **310,** de préférence oblong, de dimensions inférieures à celles de la deuxième encoche **31.** Au centre du bord du trou oblong **310** qui borde l'enveloppe géométrique arrière **43,** se trouve de préférence un bossage **27** orienté radialement vers l'extérieur du flasque de maintien **20.** L'épaisseur de matière se trouvant entre l'enveloppe géométrique arrière **43** du flasque **20** et le trou **310** de l'encoche d'assemblage **31** constitue un organe d'assemblage **26,** déformable plastiquement entre un état de montage, tel que représenté sur les figures **2a** et **2b****,** et un état monté, dans lequel l'organe d'assemblage **26** se déplace radialement vers l'intérieur du flasque de maintien **20.**

Le contour extérieur du flasque de maintien **20** est formé de portions cylindriques reliées par des pattes de fixation **23** orientées radialement vers l'extérieur du flasque de maintien **20.** Les trous de montage **28** se trouvent au centre des pattes de fixation **23.**

Selon un autre mode de réalisation non représenté, l'enveloppe géométrique avant **41** peut être formée de plus de deux portions cylindriques séparées par plus de deux encoches, de sorte que le flasque de maintien **20** peut comporter plus d'un organe d'assemblage **26,** et/ou plus d'une languette **33.**

On décrit ci-dessous un procédé d'assemblage du flasque de maintien **20** autour de la bague extérieure **14.** L'encoche de maintien **29** est insérée dans la gorge **22** de la bague extérieure **14** par l'inclinaison relative de l'alésage final **24** par rapport à la portée avant **17** de la gorge **22** de la bague extérieure **14,** afin de permettre à la languette **33** de passer axialement au-delà de ladite portée avant **17.** Ensuite, le procédé d'assemblage prévoit de déformer radialement au moins un organe d'assemblage **26** depuis l'état de montage vers l'état monté, pour disposer l'organe d'assemblage **26** au moins en partie dans la gorge **22,** afin d'assurer l'assemblage du flasque de maintien **20** par interférence entre la gorge **22,** la languette **33** et l'organe d'assemblage **26.** Ainsi, l'assemblage étant réalisé par déformation de l'organe d'assemblage **26,** l'effort à appliquer sur le flasque de maintien **20** reste limité afin de pouvoir bien contrôler l'interférence d'assemblage entre ledit flasque de maintien **20** et la bague extérieure **14** du roulement **12.**

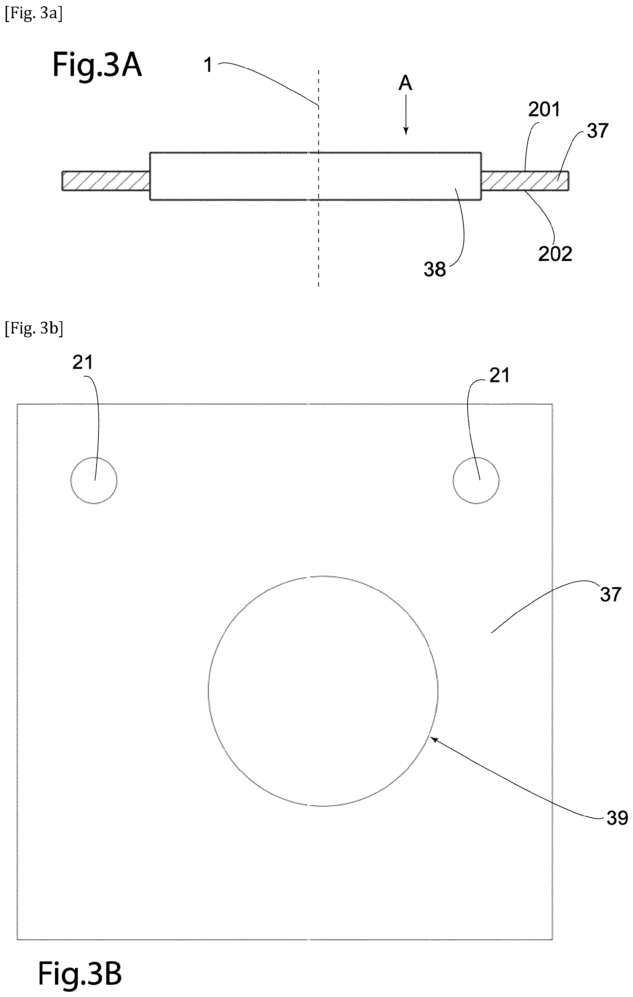

On décrit maintenant un procédé de fabrication du flasque **20** illustré sur les figures précédentes. Les figures **3a** et **3b** illustrent une étape préliminaire optionnelle du procédé de fabrication du flasque de maintien **20.** Une plaque métallique **37** est placée sur une matrice inférieure d'une presse mécanique ou hydraulique et est immobilisée, à l'aide de moyens de fixation s'insérant dans des trous de maintien **21** percés sur le contour de la plaque **37.** Un poinçon d'ébauche **38,** fixé sur un porte-outil, se déplace suivant son axe de référence **1** et suivant un sens de pénétration **A,** et perfore la plaque métallique **37** jusqu'à atteindre le fond de la matrice inférieure pour former l'enveloppe géométrique d'ébauche **39.** Le poinçon d'ébauche **38** a pour forme extérieure une enveloppe géométrique d'ébauche **39** cylindrique et de diamètre inférieur aux dimensions de l'enveloppe géométrique avant **41.** Selon d'autres modes de réalisation non représentés, l'enveloppe géométrique d'ébauche **39** est de forme et de dimensions quelconques, par exemple formée de deux portions cylindriques diamétralement opposées séparées par deux encoches diamétralement opposées. La plaque métallique **37** est d'épaisseur connue, l'épaisseur étant supérieure ou égale à 3mm et inférieure ou égale à 6mm. Selon un autre mode de réalisation, les trous de maintien **21** sont percés en même temps que l'enveloppe géométrique d'ébauche **39.**

Dans une première étape proprement dite du procédé de fabrication du flasque de maintien **20,** illustrée sur les figures **4a** et **4b****,** un premier poinçon **40,** fixé sur un premier porte-outil, se déplace suivant l'axe de référence **1** et suivant le sens de pénétration **A,** et emboutit la plaque métallique **37** pour former un évidement de matière ayant pour contour l'enveloppe géométrique avant **41.** La figure **4a** représente le premier poinçon **40** emboutissant partiellement la plaque **37** obtenue après l'étape de la figure **3b** sur une profondeur intermédiaire inférieure à l'épaisseur de la plaque **37.** Plus précisément, la profondeur intermédiaire se situe entre 1mm et 3mm, ou entre le tiers de l'épaisseur totale de la plaque **37** et les deux tiers de l'épaisseur totale de la plaque **37.** Le premier poinçon **40** a pour forme extérieure l'enveloppe géométrique avant **41.** Les portions cylindriques **251, 252** de l'enveloppe géométrique avant **41** sont situées radialement à l'extérieur de l'enveloppe géométrique d'ébauche **39,** la distance radiale étant supérieure à 1 mm, et de préférence supérieure à 3 mm, et inférieure à 10 mm, de préférence inférieure à 7mm. Sur la figure **4b** est illustrée la plaque métallique **37** dans laquelle on a formé l'évidement obtenu à l'aide du premier poinçon **40,** selon le procédé décrit dans la figure **4a****.** Lors d'une étape supplémentaire non représentée, la matière contenue dans l'encoche d'assemblage **31** de la plaque **37** est percée ou poinçonnée pour former le trou oblong **310** et l'organe d'assemblage **26.** Par ailleurs, lors de cette étape supplémentaire, les trous de montage **28** sont percés ou poinçonnés dans la plaque **37,** radialement à distance de l'enveloppe géométrique avant **41.**

Dans une deuxième étape du procédé de fabrication du flasque de maintien **20,** illustrée sur les figures **5a** et **5b****,** un deuxième poinçon **42,** fixé sur un deuxième porte-outil, se déplace suivant l'axe de référence **1,** et perfore la plaque métallique **37** pour former l'enveloppe géométrique arrière **43.** Le deuxième poinçon **42** effectue une coupe nette sur au moins une partie de l'épaisseur de la plaque **37,** notamment sur au moins 0,5 mm d'épaisseur depuis la face **203** et suivant le sens de pénétration **A.** La figure **5a** illustre le deuxième poinçon **42** perforant la plaque **37** obtenue après l'étape de la figure **4a****,** selon l'axe de référence **1** et suivant le sens de pénétration **A.** Le deuxième poinçon **42** a pour forme extérieure l'enveloppe géométrique arrière **43.** Les portions cylindriques **251, 252** de l'enveloppe géométrique avant **41** sont situées radialement à l'extérieur de l'enveloppe géométrique arrière **43,** à une distance radiale qui est supérieure à 0,1 mm, et de préférence supérieure à 0,5 mm, et inférieure à 1,0 mm, de préférence inférieure à 0,7mm. Sur la figure **5b** est illustrée la plaque métallique **37** dans laquelle on a formé l'enveloppe géométrique arrière **43** à l'aide du deuxième poinçon **42,** selon le procédé décrit dans la figure **5a**.

Lors d'une étape ultérieure non représentée, un contour extérieur de la plaque est formé, le contour prenant la forme de portions cylindriques séparées par des pattes de fixation **23** orientées radialement vers l'extérieur. Le contour est situé généralement radialement à l'intérieur des trous de maintien **21** servant à maintenir la plaque **37** sur les matrices inférieures et radialement à l'extérieur des trous de montage **28.**

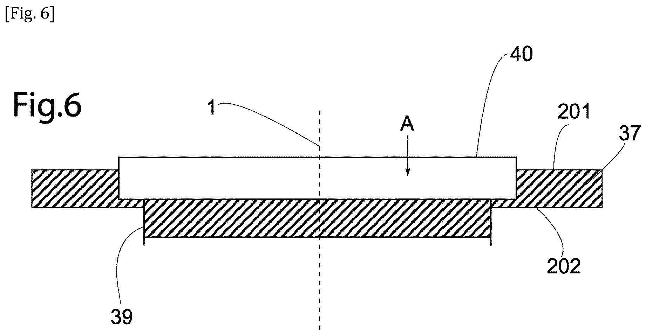

Sur la figure **6** est représenté un deuxième mode de réalisation en deux étapes du procédé de fabrication du flasque de maintien **20.** Lors de la première étape, la plaque métallique **37** est placée sur une matrice inférieure creuse **44** ayant une cavité servant à recueillir de la matière, la cavité ayant une profondeur supérieure à la distance axiale entre l'épaisseur intermédiaire de la plaque métallique **37** et la face arrière **202** de la plaque métallique **37.** La matrice inférieure creuse a pour contour l'enveloppe géométrique d'ébauche **39.** Le premier poinçon **40,** fixé sur un premier porte-outil, se déplace suivant l'axe de référence **1,** et emboutit la plaque **37** sur la profondeur intermédiaire en déplaçant la matière située à l'intérieur de l'enveloppe géométrique avant **41** dans la cavité de la matrice creuse inférieure afin de former un évidement de matière sur l'épaisseur intermédiaire de la plaque, l'évidement ayant pour contour l'enveloppe géométrique avant **41,** et un volume de matière repoussé depuis l'épaisseur intermédiaire de la plaque **37** dans la cavité de la matrice inférieure creuse, le volume de matière ayant pour contour l'enveloppe géométrique d'ébauche **39.**

Lors de la deuxième étape du deuxième mode de réalisation, similaire au mode de réalisation précédent, le deuxième poinçon **42** ayant pour contour l'enveloppe géométrique arrière **43,** se déplace suivant l'axe de référence **1,** et perfore la plaque métallique **37** pour former l'enveloppe géométrique arrière **43** de la plaque métallique **37** telle que représentée sur la figure **5b****.**

Suivant un autre mode de réalisation non illustré, les trois poinçons **38, 40, 42** se trouvent sur trois porte-outils appartenant à trois presses différentes.

Naturellement, les exemples représentés sur les figures et discutés ci-dessus ne sont donnés qu'à titre illustratif et non limitatif. Il est explicitement prévu que l'on puisse combiner entre eux les différents modes de réalisation illustrés pour en proposer d'autres.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens, et tant que cela tombe sous l'étendue de la protection conférée par les revendication ci-jointes.

## Revendications

1. Procédé de fabrication d'un flasque de maintien (20) destiné à s'insérer dans une gorge (22) d'une bague extérieure (14) d'un roulement (12), à partir d'une plaque métallique (37) ayant une épaisseur de plaque mesurée entre une face avant (201) et une face arrière (202) opposée de la plaque métallique (37), le procédé étant **caractérisé en ce qu'**il comprend au moins les deux étapes suivantes :
- par pénétration d'un premier outil (40), suivant un axe de référence (1) perpendiculaire à la plaque (37) et dans un sens de pénétration (A) depuis la face avant (201) sur une profondeur intermédiaire inférieure à l'épaisseur de plaque (37), de la matière située initialement à l'intérieur d'une enveloppe géométrique avant (41) est repoussée dans un volume situé au-delà du premier outil (40) dans le sens de pénétration (A) et délimité par une enveloppe géométrique d'ébauche (39), l'enveloppe géométrique d'ébauche (39) étant située, en projection sur un plan perpendiculaire à l'axe de référence, à l'intérieur de l'enveloppe géométrique avant (41), l'enveloppe géométrique avant (41) comportant au moins deux portions cylindriques (251, 252) centrées sur l'axe de référence (1), séparées par au moins une encoche de maintien (29) et une encoche d'assemblage (31) en saillies radialement à l'opposé de l'axe de référence (1) par rapport aux portions cylindriques (251, 252) ;
- par pénétration d'un deuxième outil (42) suivant l'axe de référence (1) et dans le sens de pénétration (A), la plaque (37) est perforée pour former un alésage final (24) ayant une enveloppe géométrique arrière (43) située, en projection sur un plan perpendiculaire à l'axe de référence (1), radialement à l'intérieur de l'enveloppe géométrique avant (41) et à l'extérieur de l'enveloppe géométrique d'ébauche (39).

2. Procédé de fabrication selon la revendication 1, **caractérisé en ce qu'**il contient une étape préliminaire dans laquelle un outil d'ébauche (38) pénètre suivant l'axe de référence (1) dans le sens de pénétration (A) depuis la face avant (201), pour perforer la plaque (37) et former un trou d'ébauche ayant pour contour l'enveloppe géométrique d'ébauche (39) entourant l'axe de référence (1).

3. Procédé de fabrication selon l'une quelconque des revendications précédentes, **caractérisé en ce que** l'encoche d'assemblage (31) de l'enveloppe géométrique avant (41) est perforée suivant l'axe de référence (1) pour former un trou (310) et un organe d'assemblage (26) plastiquement déformable situé entre le trou (310) et l'enveloppe géométrique arrière (43).

4. Procédé de fabrication selon l'une quelconque des revendications précédentes, **caractérisé en ce que** l'enveloppe géométrique arrière (43) comporte des portions cylindriques (241, 242) centrées sur l'axe de référence (1), deux des portions cylindriques (241, 242) étant situées de part et d'autre d'une première singularité (11) de l'enveloppe géométrique arrière (43), la première singularité (11) étant située radialement dans le prolongement de l'encoche de maintien (29), pour former une languette (33) d'épaisseur inférieure à l'épaisseur de la plaque métallique (37) en saillie radialement vers l'axe de référence (1) par rapport aux portions cylindriques (241, 242) de l'enveloppe géométrique arrière (43).

5. Procédé de fabrication selon la revendication 4, caractérisé en que la première singularité (11) comporte des zones de raccordement (9) entre la languette (33) et les deux portions cylindriques (241, 242) situées de part et d'autre de la première singularité (11), les zones de raccordement (9) s'étendant radialement à l'extérieur des portions cylindriques (241, 242) situées de part et d'autre de la première singularité (11).

6. Procédé de fabrication selon l'une quelconque des revendications 4 à 5, **caractérisé en ce que** l'enveloppe géométrique arrière (43) comporte au moins une deuxième singularité (13) située entre deux portions cylindriques (241, 242) adjacentes parmi les portions cylindriques de l'enveloppe géométrique arrière (43), radialement dans le prolongement de l'encoche d'assemblage (31), la deuxième singularité (13) comportant des zones de raccordement (15) avec les deux portions cylindriques adjacentes (241, 242), les zones de raccordement (15) de la deuxième singularité (13) s'étendant :
- radialement à l'extérieur des portions cylindriques (241, 242) de l'enveloppe géométrique arrière (43) et axialement sur l'épaisseur de l'enveloppe géométrique arrière (43), ou ;
- radialement à l'extérieur des portions cylindriques (241, 242) de l'enveloppe géométrique arrière (43) et axialement sur toute l'épaisseur du flasque de maintien (20).

7. Procédé de fabrication selon l'une quelconque des revendications précédentes, **caractérisé en ce que** l'enveloppe géométrique avant (41) comporte en tout deux portions cylindriques (251, 252) diamétralement opposées, et une encoche de maintien (29) et une encoche d'assemblage (31) séparant les deux portions cylindriques (251, 252) de l'enveloppe géométrique avant (41), l'encoche de maintien (29) et l'encoche d'assemblage (31) étant diamétralement opposées.

8. Procédé de fabrication selon l'une quelconque des revendications précédentes, **caractérisé en ce que** les perforations sont réalisées par poinçonnage.

9. Procédé de fabrication selon l'une quelconque des revendications précédentes, **caractérisé en ce que** la matière est repoussée par emboutissage.

10. Procédé de fabrication selon l'une quelconque des revendications précédentes, **caractérisé en ce que** sont découpés dans la plaque (37), radialement à l'extérieur de l'enveloppe géométrique avant (41) de la plaque (37), des trous de montage (28) et des trous de maintien (21), les trous de maintien (21) servant à maintenir la plaque (37) lors des étapes de fabrication.

11. Procédé de fabrication selon la revendication 10, **caractérisé en ce qu'**est découpé, en fin de fabrication de la plaque (37), un contour de la plaque (37) enveloppant les trous de montage (28) et situé radialement à l'intérieur des trous de maintien (21).

12. Procédé de fabrication selon l'une quelconque des revendications précédentes, **caractérisé en ce que** :
- la profondeur intermédiaire est supérieure au tiers de l'épaisseur de la plaque (37), et/ou
- la profondeur intermédiaire est inférieure aux deux tiers de l'épaisseur de la plaque (37), et/ou
- la différence entre l'épaisseur de la plaque (37) et la profondeur intermédiaire est supérieure à 1mm et inférieure à 3mm, et/ou
- la profondeur intermédiaire est supérieure à 1 mm est inférieure à 3 mm, et/ou
- l'épaisseur de la plaque (37) est supérieure à 3 mm, par exemple 4 mm, et inférieure à 6 mm.

13. Procédé de fabrication selon l'une quelconque des revendications précédentes, **caractérisé en ce que** le deuxième outil (42) réalise une arête vive au niveau de la profondeur intermédiaire et une découpe nette de l'alésage final (24) sur une profondeur d'au moins 0,5 mm à partir de l'arête vive dans le sens de pénétration (A).

14. Procédé de fabrication selon l'une quelconque des revendications précédentes, **caractérisé en ce que** :
- les portions cylindriques (251, 252) de l'enveloppe géométrique avant (41) sont situées à une distance radiale de l'alésage final (24) qui est supérieure à 0,1 mm, et de préférence supérieure à 0,5 mm, et inférieure à 1,0 mm, de préférence inférieure à 0,7mm ; et/ou
- les portions cylindriques (251, 252) de l'enveloppe géométrique avant (41) sont situées à une distance radiale de l'enveloppe géométrique d'ébauche (39) qui est supérieure à 1 mm, et de préférence supérieure à 3 mm, et inférieure à 10 mm, de préférence inférieure à 7mm.

15. Procédé de fabrication d'un ensemble de guidage en rotation destiné à être monté à l'intérieur d'un carter (10), comportant la fabrication d'un flasque de maintien (20) selon l'une quelconque des revendications précédentes en combinaison avec la revendication 3 et la revendication 4, et le montage du flasque de maintien (20) dans une gorge (22) d'une bague extérieure (14) d'un roulement (12), la gorge (22) présentant une portée avant (17) ayant un premier diamètre et une portée arrière (19) ayant un deuxième diamètre supérieur au premier diamètre, **caractérisé en ce que** la languette (33) du flasque de maintien (20) est insérée dans la gorge (22) de la bague extérieure (14) du roulement (12) et **en ce qu'**on vient déformer plastiquement l'organe d'assemblage (26) pour l'insérer radialement et au moins partiellement dans la gorge (22), avec un jeu supérieur à 0,1 mm entre l'organe d'assemblage (26) déformé et le fond de la gorge (22).

## Patentansprüche

1. Verfahren zur Herstellung eines Halteflansches (20), der dazu bestimmt ist, in eine Nut (22) eines Außenrings (14) eines Lagers (12) eingesetzt zu werden, ausgehend von einer Metallplatte (37) mit einer Plattendicke, die zwischen einer Vorderseite (201) und einer gegenüberliegenden Rückseite (202) der Metallplatte (37) gemessen wird, wobei das Verfahren **gekennzeichnet ist durch** mindestens die folgenden beiden Schritte:
- durch Eindringen eines ersten Werkzeugs (40) entlang einer Referenzachse (1) senkrecht zur Platte (37) und in einer Eindringrichtung (A) von der Vorderseite (201) auf eine Zwischentiefe, die geringer ist als die Plattendicke (37), wird Material, das sich anfänglich innerhalb einer vorderen geometrischen Hüllkurve (41) befand, in ein Volumen zurückgedrängt, das sich jenseits des ersten Werkzeugs (40) in der Eindringrichtung (A) befindet und durch eine geometrische Rohlingshüllkurve (39) begrenzt wird, wobei sich die geometrische Rohlingshüllkurve (39) in Projektion auf eine zur Referenzachse senkrechte Ebene innerhalb der vorderen geometrischen Hüllkurve (41) befindet, wobei die vordere geometrische Hüllkurve (41) mindestens zwei zylindrische Abschnitte (251, 252) aufweist, die auf der Referenzachse (1) zentriert sind, durch mindestens eine Haltekerbe (29) und eine Montagekerbe (31) getrennt sind, die radial gegenüber der Referenzachse (1) in Bezug auf die zylindrischen Abschnitte (251, 252) vorstehen;
- durch Eindringen eines zweiten Werkzeugs (42) entlang der Referenzachse (1) und in der Eindringrichtung (A) wird die Platte (37) perforiert, um eine finale Bohrung (24) zu bilden, die eine hintere geometrische Hüllkurve (43) aufweist, die sich in Projektion auf eine zur Referenzachse (1) senkrechte Ebene radial innerhalb der vorderen geometrischen Hüllkurve (41) und außerhalb der geometrischen Rohlingshüllkurve (39) befindet.

2. Herstellungsverfahren nach Anspruch 1, **dadurch gekennzeichnet, dass** es einen vorläufigen Schritt enthält, bei dem ein Rohlingswerkzeug (38) entlang der Referenzachse (1) in der Eindringrichtung (A) von der Vorderseite (201) aus eindringt, um die Platte (37) zu perforieren und ein Rohlingsloch zu bilden, dessen Kontur die geometrische Rohlingshüllkurve (39) ist, die die Referenzachse (1) umgibt.

3. Herstellungsverfahren nach einem der vorstehenden Ansprüche, **dadurch gekennzeichnet, dass** die Montagekerbe (31) der vorderen geometrischen Hüllkurve (41) entlang der Referenzachse (1) perforiert wird, um ein Loch (310) und ein plastisch verformbares Montageelement (26) zu bilden, das sich zwischen dem Loch (310) und der hinteren geometrischen Hüllkurve (43) befindet.

4. Herstellungsverfahren nach einem der vorstehenden Ansprüche, **dadurch gekennzeichnet, dass** die hintere geometrische Hüllkurve (43) zylindrische Abschnitte (241, 242) aufweist, die auf die Referenzachse (1) zentriert sind, wobei sich zwei der zylindrischen Abschnitte (241, 242) beiderseits einer ersten Singularität (11) der hinteren geometrischen Hüllkurve (43) befinden, wobei sich die erste Singularität (11) radial in der Verlängerung der Haltekerbe (29) befindet, um eine Lasche (33) mit einer Dicke zu bilden, die geringer ist als die Dicke der Metallplatte (37), die radial zur Referenzachse (1) hin in Bezug auf die zylindrischen Abschnitte (241, 242) der hinteren geometrischen Hüllkurve (43) vorsteht.

5. Herstellungsverfahren nach Anspruch 4, **dadurch gekennzeichnet, dass** die erste Singularität (11) Verbindungszonen (9) zwischen der Lasche (33) und den beiden zylindrischen Abschnitten (241, 242) aufweist, die sich beiderseits der ersten Singularität (11) befinden, wobei sich die Verbindungszonen (9) radial außerhalb der zylindrischen Abschnitte (241, 242) erstrecken, die sich beiderseits der ersten Singularität (11) befinden.

6. Herstellungsverfahren nach einem der Ansprüche 4 bis 5,
**dadurch gekennzeichnet, dass** die hintere geometrische Hüllkurve (43) mindestens eine zweite Singularität (13) aufweist, die sich zwischen zwei benachbarten zylindrischen Abschnitten (241, 242) unter den zylindrischen Abschnitten der hinteren geometrischen Hüllkurve (43) radial in der Verlängerung der Montagekerbe (31) befindet, wobei die zweite Singularität (13) Verbindungszonen (15) mit den zwei benachbarten zylindrischen Abschnitten (241, 242) aufweist, wobei sich die Verbindungszonen (15) der zweiten Singularität (13) erstrecken:
- radial außerhalb der zylindrischen Abschnitte (241, 242) der hinteren geometrischen Hüllkurve (43) und axial über die Dicke der hinteren geometrischen Hüllkurve (43), oder;
- radial außerhalb der zylindrischen Abschnitte (241, 242) der hinteren geometrischen Hüllkurve (43) und axial über die gesamte Dicke des Halteflansches (20).

7. Herstellungsverfahren nach einem der vorstehenden Ansprüche, **dadurch gekennzeichnet, dass** die vordere geometrische Hüllkurve (41) insgesamt zwei einander diametral gegenüberliegende zylindrische Abschnitte (251, 252) aufweist, und eine Haltekerbe (29) und eine Montagekerbe (31), die die beiden zylindrischen Abschnitte (251, 252) der vorderen geometrischen Hüllkurve (41) trennen, wobei die Haltekerbe (29) und die Montagekerbe (31) einander diametral gegenüberliegend angeordnet sind.

8. Herstellungsverfahren nach einem der vorstehenden Ansprüche, **dadurch gekennzeichnet, dass** die Perforationen durch Stanzen hergestellt werden.

9. Herstellungsverfahren nach einem der vorstehenden Ansprüche, **dadurch gekennzeichnet, dass** das Material durch Tiefziehen zurückgedrängt wird.

10. Herstellungsverfahren nach einem der vorstehenden Ansprüche, **dadurch gekennzeichnet, dass** in der Platte (37), radial außerhalb der vorderen geometrischen Hüllkurve (41) der Platte (37), Montagelöcher (28) und Haltelöcher (21) ausgeschnitten werden, wobei die Haltelöcher (21) dazu dienen, die Platte (37) während der Herstellungsschritte zu halten.

11. Herstellungsverfahren nach Anspruch 10,
**gekennzeichnet dadurch, dass** am Ende der Herstellung der Platte (37) eine Kontur der Platte (37) ausgeschnitten wird, die die Montagelöcher (28) umhüllt und sich radial innerhalb der Haltelöcher (21) befindet.

12. Herstellungsverfahren nach einem der vorstehenden Ansprüche, **dadurch gekennzeichnet, dass**
- die Zwischentiefe größer ist als ein Drittel der Dicke der Platte (37), und/oder
- die Zwischentiefe geringer ist als zwei Drittel der Dicke der Platte (37), und/oder
- der Unterschied zwischen der Dicke der Platte (37) und der Zwischentiefe größer als 1 mm und kleiner als 3 mm ist, und/oder
- die Zwischentiefe größer als 1 mm und kleiner als 3 mm ist, und/oder
- die Dicke der Platte (37) größer als 3 mm, beispielsweise 4 mm, und kleiner als 6 mm ist.

13. Herstellungsverfahren nach einem der vorstehenden Ansprüche, **dadurch gekennzeichnet, dass** das zweite Werkzeug (42) eine scharfe Kante auf der Höhe der Zwischentiefe und einen sauberen Schnitt der finalen Bohrung (24) auf einer Tiefe von mindestens 0,5 mm ab der scharfen Kante in der Eindringrichtung (A) herstellt.

14. Herstellungsverfahren nach einem der vorstehenden Ansprüche, **dadurch gekennzeichnet, dass**
- die zylindrischen Abschnitte (251, 252) der vorderen geometrischen Hüllkurve (41) sich in einem radialen Abstand von der finalen Bohrung (24) befinden, der größer als 0,1 mm und vorzugsweise größer als 0,5 mm und kleiner als 1,0 mm, vorzugsweise kleiner als 0,7 mm, ist; und/oder
- die zylindrischen Abschnitte (251, 252) der vorderen geometrischen Hüllkurve (41) sich in einem radialen Abstand von der geometrischen Rohlingshüllkurve (39) befinden, der größer als 1 mm und vorzugsweise größer als 3 mm und kleiner als 10 mm, vorzugsweise kleiner als 7 mm, ist.

15. Verfahren zur Herstellung einer Drehführungsanordnung, die dazu bestimmt ist, im Inneren eines Gehäuses (10) montiert zu werden, umfassend die Herstellung eines Halteflansches (20) nach einem der vorstehenden Ansprüche in Verbindung mit Anspruch 3 und Anspruch 4, und die Montage des Halteflansches (20) in einer Nut (22) eines Außenrings (14) eines Lagers (12), wobei die Nut (22) eine vordere Lagerfläche (17) mit einem ersten Durchmesser und eine hintere Lagerfläche (19) mit einem zweiten Durchmesser aufweist, der größer als der erste Durchmesser ist, **dadurch gekennzeichnet, dass** die Lasche (33) des Halteflansches (20) in die Nut (22) des Außenrings (14) des Lagers (12) eingesetzt wird und dass das Montageelement (26) plastisch verformt wird, um es radial und mindestens teilweise in die Nut (22) einzusetzen, mit einem Spiel von mehr als 0,1 mm zwischen dem verformten Montageelement (26) und dem Nutgrund (22).

## Claims

1. Method for manufacturing a holding flange (20) intended to be inserted into a groove (22) of an outer ring (14) of a rolling bearing (12), from a metal plate (37) having a plate thickness measured between a front face (201) and an opposite rear face (202) of the metal plate (37), the method being **characterized in that** it comprises at least the following two steps:
- by penetration of a first tool (40), along a reference axis (1) perpendicular to the plate (37) and in a direction of penetration (A) from the front face (201) to an intermediate depth of less than the thickness of the plate (37), the material initially located inside a front geometric envelope (41) is pushed back into a volume located beyond the first tool (40) in the direction of penetration (A) and delimited by a blank geometric envelope (39), the blank geometric envelope (39) being located, projecting on a plane perpendicular to the reference axis, inside the front geometric envelope (41), the front geometric envelope (41) comprising at least two cylindrical portions (251, 252) centered on the reference axis (1), separated by at least one holding notch (29) and an assembly notch (31) radially protruding opposite the reference axis (1) relative to the cylindrical portions (251, 252);
- by penetration of a second tool (42) along the reference axis (1) and in the direction of penetration (A), the plate (37) is perforated to form a final bore (24) having a rear geometric envelope (43) located, projecting on a plane perpendicular to the reference axis (1), radially inside the front geometric envelope (41) and outside the blank geometric envelope (39).

2. Manufacturing method according to claim 1, **characterized in that** it contains a preliminary step wherein a blank tool (38) penetrates along the reference axis (1) in the direction of penetration (A) from the front face (201), to perforate the plate (37) and form a blank hole having as a contour the blank geometric envelope (39) surrounding the reference axis (1).

3. Manufacturing method according to any one of the preceding claims, **characterized in that** the assembly notch (31) of the front geometric envelope (41) is perforated along the reference axis (1) to form a hole (310) and a plastically deformable assembly member (26) located between the hole (310) and the rear geometric envelope (43).

4. Manufacturing method according to any one of the preceding claims, **characterized in that** the rear geometric envelope (43) comprises cylindrical portions (241, 242) centered on the reference axis (1), two of the cylindrical portions (241, 242) being located on either side of a first singularity (11) of the rear geometric envelope (43), the first singularity (11) being located radially in line with the holding notch (29), to form a tongue (33) with a thickness of less than the thickness of the metal plate (37) protruding radially toward the reference axis (1) relative to the cylindrical portions (241, 242) of the rear geometric envelope (43).

5. Manufacturing method according to claim 4, **characterized in that** the first singularity (11) comprises connection zones (9) between the tongue (33) and the two cylindrical portions (241, 242) located on either side of the first singularity (11), the connection zones (9) extending radially outside the cylindrical portions (241, 242) located on either side of the first singularity (11).

6. Manufacturing method according to any one of claims 4 to 5, **characterized in that** the rear geometric envelope (43) comprises at least a second singularity (13) located between two adjacent cylindrical portions (241, 242) among the cylindrical portions of the rear geometric envelope (43), radially in line with the assembly notch (31), the second singularity (13) comprising connection zones (15) with the two adjacent cylindrical portions (241, 242), the connection zones (15) of the second singularity (13) extending:
- radially outside the cylindrical portions (241, 242) of the rear geometric envelope (43) and axially over the thickness of the rear geometric envelope (43), or;
- radially outside the cylindrical portions (241, 242) of the rear geometric envelope (43) and axially over the entire thickness of the holding flange (20).

7. Manufacturing method according to any one of the preceding claims, **characterized in that** the front geometric envelope (41) comprises in total two cylindrical portions (251, 252) that are diametrically opposed, and a holding notch (29) and an assembly notch (31) separating the two cylindrical portions (251, 252) of the front geometric envelope (41), the holding notch (29) and the assembly notch (31) being diametrically opposed.

8. Manufacturing method according to any one of the preceding claims, **characterized in that** the perforations are made by punching.

9. Manufacturing method according to any one of the preceding claims, **characterized in that** the material is pushed back by stamping.

10. Manufacturing method according to any one of the preceding claims, **characterized in that,** radially outside the front geometric envelope (41) of the plate (37), mounting holes (28) and holding holes (21) are cut from the plate (37), the holding holes (21) being used to hold the plate (37) during the manufacturing steps.

11. Manufacturing method according to claim 10, **characterized in that,** at the end of manufacture of the plate (37), a contour of the plate (37) is cut that encompasses the mounting holes (28) and is located radially inside the holding holes (21).

12. Manufacturing method according to any one of the preceding claims, **characterized in that:**
- the intermediate depth is greater than one-third of the thickness of the plate (37), and/or
- the intermediate depth is less than two-thirds of the thickness of the plate (37), and/or
- the difference between the thickness of the plate (37) and the intermediate depth is greater than 1 mm and less than 3 mm, and/or
- the intermediate depth is greater than 1 mm and less than 3 mm, and/or
- the thickness of the plate (37) is greater than 3 mm, for example 4 mm, and less than 6 mm.

13. Manufacturing method according to any one of the preceding claims, **characterized in that** the second tool (42) produces a sharp edge at the intermediate depth and a clean cut of the final bore (24) over a depth of at least 0.5 mm from the sharp edge in the direction of penetration (A).

14. Manufacturing method according to any one of the preceding claims, **characterized in that:**
- the cylindrical portions (251, 252) of the front geometric envelope (41) are located at a radial distance from the final bore (24) that is greater than 0.1 mm, and preferably greater than 0.5 mm, and less than 1.0 mm, preferably less than 0.7 mm; and/or
- the cylindrical portions (251, 252) of the front geometric envelope (41) are located at a radial distance from the blank geometric envelope (39) that is greater than 1 mm, and preferably greater than 3 mm, and less than 10 mm, preferably less than 7 mm.

15. Method for manufacturing a rotational guide assembly for mounting inside a casing (10), comprising manufacturing a holding flange (20) according to any one of the preceding claims in combination with claim 3 and claim 4, and mounting the holding flange (20) in a groove (22) of an outer ring (14) of a rolling bearing (12), the groove (22) having a front bearing surface (17) with a first diameter and a rear bearing surface (19) with a second diameter greater than the first diameter, **characterized in that** the tongue (33) of the holding flange (20) is inserted into the groove (22) of the outer ring (14) of the rolling bearing (12) and **in that** the assembly member (26) is plastically deformed in order to be inserted radially and at least partially into the groove (22), with a clearance greater than 0.1 mm between the deformed assembly member (26) and the bottom of the groove (22).
